# EUROPEAN PATENT SPECIFICATION

(11) **EP 1 933 010 B1**
(45) Date of publication and mention of the grant of the patent: **23.06.2010**
(21) Application number: 07023188.1
(22) Date of filing: 29.11.2007
(51) Int. Cl.: F01N 3/022, F01N 3/28

(54) **Motorcycle**
Motorrad
Motocyclette

(30) Priority: 06.12.2006 JP 2006330004
(43) Date of publication of application: 18.06.2008
(73) Proprietor: Yamaha Hatsudoki Kabushiki Kaisha, Iwata-shi, Shizuoka-ken 438-8501 (JP)
(72) Inventor: Kajiwara, Kenichi, Iwata-shi, Shizuoka-ken 438-8501 (JP); Nishizawa, Kazuya, Iwata-shi, Shizuoka-ken 438-8501 (JP); Gouke, Takayuki, Iwata-shi, Shizuoka-ken 438-8501 (JP); Igarashi, Takeshi, Iwata-shi, Shizuoka-ken 438-8501 (JP)
(74) Representative: Grünecker, Kinkeldey, Stockmair & Schwanhäusser Anwaltssozietät

(56) References cited:
- EP-A- 1 749 988
- FR-A- 2 827 908
- JP-A- 57 041 416
- JP-A- 2006 226 262
- US-A- 5 396 767
- US-A1- 2002 065 007

## Description

The present invention relates to a straddle type vehicle, for example, a motorcycle.

Prior art document EP 1 749 988 A1 according to Article 54(3) EPC discloses a straddle type vehicle comprising an engine disposed between front and rear wheels, and first and second catalytic converters disposed in an exhaust conduit of the engine, wherein a secondary air inducting conduit is provided for supplying secondary air to the exhaust conduit at a position between the first and second catalytic converters, and wherein a part of the secondary air inducting conduit is exposed at least either forward or sideward in the vehicle in the rear of the front wheel to form a secondary air cooling conduit.

Prior art document US 5396767 discloses an engine exhaust gas cleaning system including a converter section that is disposed at the rear end of the exhaust pipe and which has an outer shell that is surrounded by a further outer shell having a rearwardly disposed atmospheric air inlet and a forwardly disposed atmospheric air outlet that communicates with the inlet of the converter through a venturi section. This heats the air admitted to the converter and also insures that any exhaust sound or exhaust leakage will be disposed rearwardly.

Usually, exhaust gas from the engine is emitted to the air. It is required to purify exhaust gas as much as possible before an emission of the exhaust gas. Therefore, conventionally, a catalytic converter (catalyzer) is provided in a midway of an exhaust conduit, through which exhaust gas from the engine is emitted, and the purification is made by the catalyzer (for example, see Patent Document 1).

In the conventional art, to effectively purify exhaust gas by the catalyzer, a secondary air inducting conduit is mounted in an upstream of the catalyzer, and outside air (secondary air) is inducted from the secondary air inducting conduit through the exhaust conduit to the catalyzer. Thereby, it enhances combustion efficiency of exhaust gas when secondary air passes through the catalyzer.
Patent Document 1: JP-A-2001-130474

However, in the conventional art, the vehicle has a construction such that the secondary air inducting conduit extending downward from an air cleaner toward the exhaust conduit is covered from the front and the side by a vehicle cover and the like. Thus, the vehicle cover hinders heat at a high temperature from being emitted outside, and the heat at a high temperature is apt to directly transmit to the secondary air inducting conduit.

As a result, there is a problem that oxygen in secondary air flowing through the secondary air inducting conduit expands due to heat at a high temperature from the engine, an oxygen concentration lowers, and thus it is difficult to enhance combustion efficiency of exhaust gas by secondary air in the catalyzer.

It is the object of the present invention to provided a straddle type vehicle, in which oxygen in air flowing through a secondary air inducting conduit can be effectively cooled down, and combustion efficiency of exhaust gas by secondary air in a catalyzer can be enhanced.

This objective is solved in an inventive manner by a straddle type vehicle having the features of independent claim 1. Preferred embodiments are laid down in the dependent claims.

Accordingly, it is provided a straddle type vehicle comprising an engine disposed between front and rear wheels, and first and second catalytic connectors disposed in an exhaust conduit of the engine, wherein a secondary air inducting conduit is provided for supplying secondary air to the exhaust conduit at a position between the first and second catalytic converters, and wherein a part of the secondary air inducting conduit is exposed at least either forward or sideward in the vehicle in the rear of the front wheel to form a secondary air cooling conduit.

Preferably, the first and second catalytic converters are a front catalytic converter and a rear catalytic converter spaced apart in the fore to aft direction in a midway part of an exhaust conduit of the engine, and wherein a downstream end of the secondary air inducting conduit is connected to the exhaust conduit in a position between the front catalytic converter and the rear catalytic converter.

Still further, preferably at least one conduit section of a secondary air inducting conduit is exposed to the space in the rear of a front wheel and in front of an engine to become the secondary air cooling conduit section for cooling down secondary air, to cool down secondary air flowing thought the secondary air inducting conduit, and to increase the oxygen concentration of secondary air.

Yet further still, preferably at least one conduit section is exposed to an inside of a space formed on a front part of the vehicle body and in the rear of the front wheel, and constructs the secondary air cooling conduit.

Preferably, at least one conduit section is disposed to be exposed to a space on a side of the vehicle body in the rear of the front wheel.

Still further, preferably the secondary air cooling conduit section is at least partially formed with a metal pipe.

Further, it is beneficial if a connection part of the secondary air inducting conduit, which is connected to the exhaust conduit, is disposed below the engine, and the secondary air inducting conduit is formed to extend from the connection part in the horizontal direction below the engine.

It is further beneficial if a part of the secondary air inducting conduit is formed to extend from either one of the right side and the left side to the other side traversing a center of the vehicle.

It is still further beneficial if a frame is formed with right and left frames, at least a part of the secondary air inducting conduit is disposed to overlap the right and left frames in a side view.

In the following, the present invention is explained in greater detail with respect to several embodiments thereof in conjunction with the accompanying drawings, wherein:
- FIG. 1: is a side view for showing a motorcycle according to a first embodiment of the present teaching which illustrates the combination of the features of independent claim 1,
- FIG. 2: is an enlarged view for showing frames, an exhaust conduit, and a secondary air inducting conduit, and so forth in FIG. 1,
- FIG. 3: is a bottom plan view for showing the frames, the exhaust conduit, and the secondary air inducting conduit in FIG. 2,
- FIG. 4: is a plan view of the secondary air inducting conduit viewing in a direction of an arrow VI-VI in FIG. 2,
- FIG. 5: is a front view for showing the frames, the exhaust conduit, a front catalyzer, the secondary air inducting conduit, and so forth in FIG. 2,
- FIG. 6: is a side view for showing a motorcycle according to a second embodiment of the present teaching but does not illustrate the combination of the features of independent claim 1,
- FIG. 7: is a front view for showing the motorcycle in FIG. 6,
- FIG. 8: is a perspective view for showing the exhaust conduit and so forth in FIG. 6 as a single part, and
- FIG. 9: is a side view for showing a motorcycle according to a third embodiment of the present teaching but does not illustrate the combination of the features of independent claim 1.

### Description of Reference Numerals and Symbols:

1, 100, 200: motorcycle (straddle type vehicle)
10, 110: frame
12: left frame
13: right frame
19: air cleaner
20, 130: engine
21, 131: crankcase
22, 132: cylinder
30, 150: exhaust conduit
80, 160, 263: secondary air inducting conduit
80A: first conduit section
80B: second conduit section
80C: third conduit section (secondary air cooling conduit section)
80D: fourth conduit section (secondary air cooling conduit section)
80E: fifth conduit section (secondary air cooling conduit section)
80F: sixth conduit section
80G: seventh conduit section
80G1: connection part
160A: first conduit section (secondary air cooling conduit section)
160B: second conduit section (secondary air cooling conduit section)
160C: third conduit section

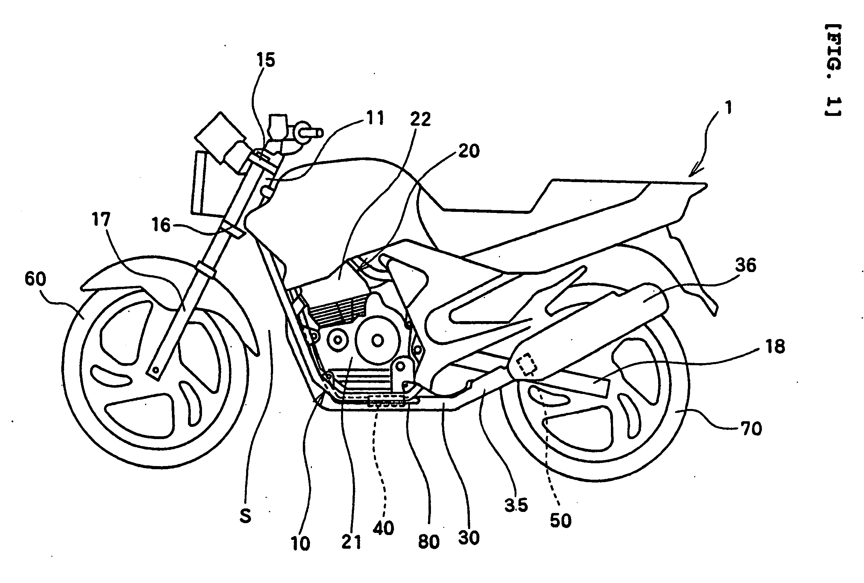

The straddle type vehicle according to a first embodiment of the present teaching which illustrates the combination of the features of independent claim 1 will be described with reference to FIGS. 1 through 5 with a case of application to a motorcycle as an example. A motorcycle 1 according to the embodiment of the present teaching includes a frame 10, an engine 20, an exhaust conduit 30, a front catalyzer 40, a rear catalyzer 50, and a secondary air inducting conduit 80.

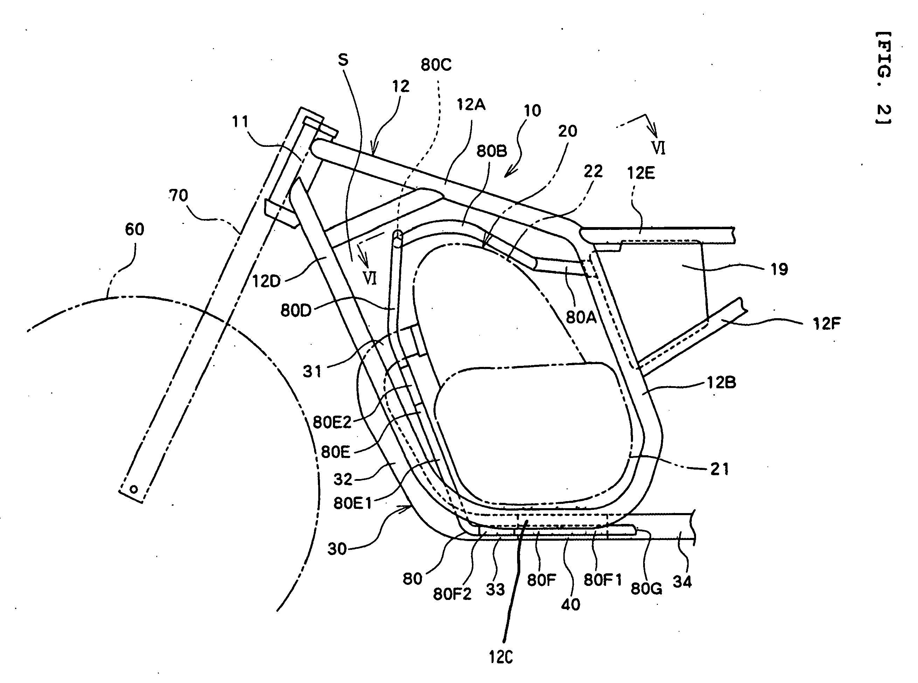

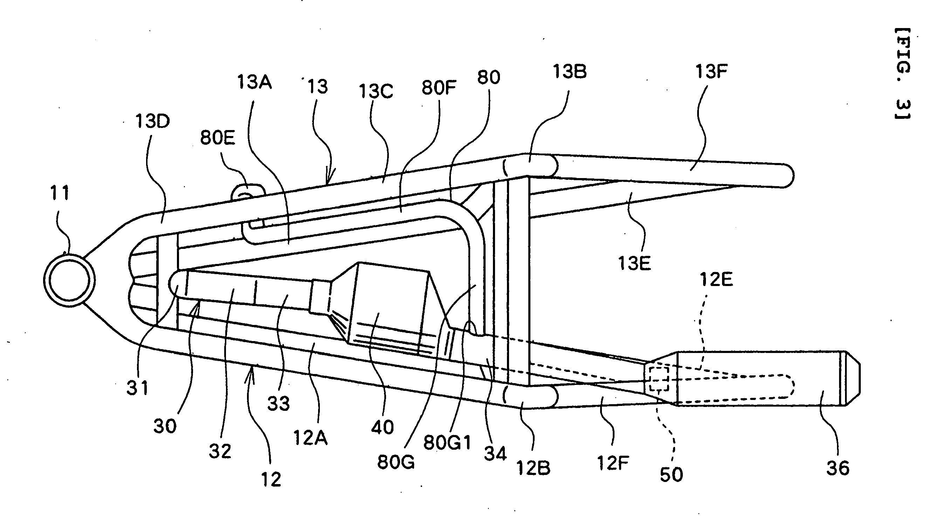

The frame 10 includes a head pipe 11, a left frame 12 formed with a generally parallelogram-shaped frame body, and a right frame 13 similarly formed with a generally parallelogram-shaped frame body (see FIGs. 2 and 3).

As shown in FIG. 2, the left frame 12 is connected to an upper end of the head pipe 11 at its front end. The left frame 12 includes a first frame part 12A extending rearward obliquely downward therefrom, a second frame part 12B extending rearward obliquely downward from a rear end of the first frame part 12A curving in a dog leg shape and curvedly extending forward obliquely downward at its lower end, a third frame part 12C curvedly extending forward from the lower end of the second frame part 12B in a generally horizontal direction, and a fourth frame part 12D curvedly extending forward obliquely upward from a front end of the third frame part 12C and connected to a lower end of the head pipe 11 at its upper end.

The left frame 12 includes a seat rail 12E connected to a boundary part between the first frame part 12A and the second frame part 12B at its front end and extending rearward in a generally horizontal direction therefrom, and a backstay 12F connected to a middle part of the second frame part 12B in the direction of the length at its front end and extending rearward obliquely upward therefrom. The seat rail 12E is connected to a midway part (not shown) of the backstay 12F at its rear end.

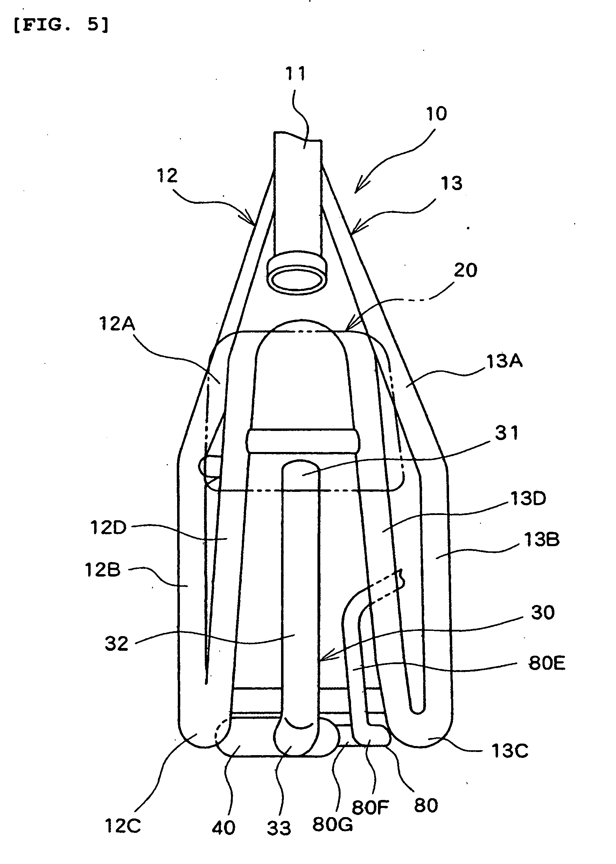

Also, as shown in FIGs. 3 and 5, similarly to the left frame 12, the right frame 13 includes a first frame part 13A, a second frame part 13B, a third frame part 13C, a fourth frame part 13D, a seat rail 13E, and a backstay 13F.

As shown in FIG. 1, a rotating shaft (not shown) provided on handlebars 14 is rotatably fitted into the head pipe 11. The rotating shaft of the handlebars 14 is fixed to a middle part of an upper bracket 15 in the direction of the length and a middle part of an under bracket 16 in the direction of the length. Also, parts around upper ends of left and right front forks 17 (only one shown) are inserted and fixed to both left and right ends of those brackets 15 and 16. A front wheel 60 is rotatably coupled to lower ends of the front forks 17.

Front ends of a swing arm 18 are swingably coupled to and supported by the second frame part 12B of the left frame 12 and the second frame part 13B of the right frame 13. A rear wheel 70 is rotatably coupled to rear ends of the swing arm 18.

Further, an air cleaner 19 is disposed in a position in the rear of the engine 20 between the seat rail 12 E and the backstay 12F of the frame 10. The air cleaner 19 removes debris such as dust contained in air supplied to the engine 20 and the secondary air inducting conduit 80.

The engine 20 is disposed inside each of the left frame 12 and the right frame 13 formed with generally rectangular frame bodies (see FIG. 2), and is suspended by those frames 12 and 13. As shown in FIGs. 1 and 2, the engine 20 includes a crankcase 21 and a cylinder 22 provided on an upper part of the crankcase 21.

As shown in FIGs. 2, 3 and 5, the exhaust conduit 30 includes a first pipe 31 extending forward from the cylinder 22 of the engine 20 curving in an arc shape, a second pipe 32 extending rearward obliquely downward from the first pipe 31, a third pipe 33 extending rearward from the second pipe 32 in a generally horizontal direction and connected to the front catalyzer 40, a fourth pipe 34 extending rearward from the front catalyzer 40 in a generally horizontal direction, a fifth pipe 35 curvedly extending rearward obliquely upward from the fourth pipe 34, and a muffler 36 connected to the fifth pipe 35.

The exhaust conduit 30 discharges exhaust gas from the engine 20 outside via the front catalyzer 40, the rear catalyzer 50 and the muffler 36.

The front catalyzer 40 is disposed in a position below the crankcase 21 between the third pipe 33 and the fourth pipe 34 of the exhaust conduit 30. The front catalyzer 40 is formed into a flat shape in which a width in the transverse direction is larger than a height in the vertical direction. Therefore, the front catalyzer 40 does not protrude more downward than the third pipe 33 and the fourth pipe 34 of the exhaust conduit 30 extending in the horizontal direction below the crankcase 21, and thereby a minimum height of the vehicle body from the ground is assured.

The rear catalyzer 50 is disposed in the muffler 36 of the exhaust conduit 30 positioned downstream of the front catalyzer 40. The front catalyzer 40 and the rear catalyzer 50 facilitate combustion of deleterious elements (HC, NOₓ and so forth) included in exhaust gas discharged from the engine 20, and thereby purify the exhaust gas.

The secondary air inducting conduit 80 inducts outside air passed through the air cleaner 19 into the rear catalyzer 50 via the fourth pipe 34 of the exhaust conduit 30, and enhances combustion efficiency of exhaust gas in the rear catalyzer 50. The secondary air inducting conduit 80 is formed with a metal pipe, rubber hose, or the like as shown in FIGs. 2 through 5.

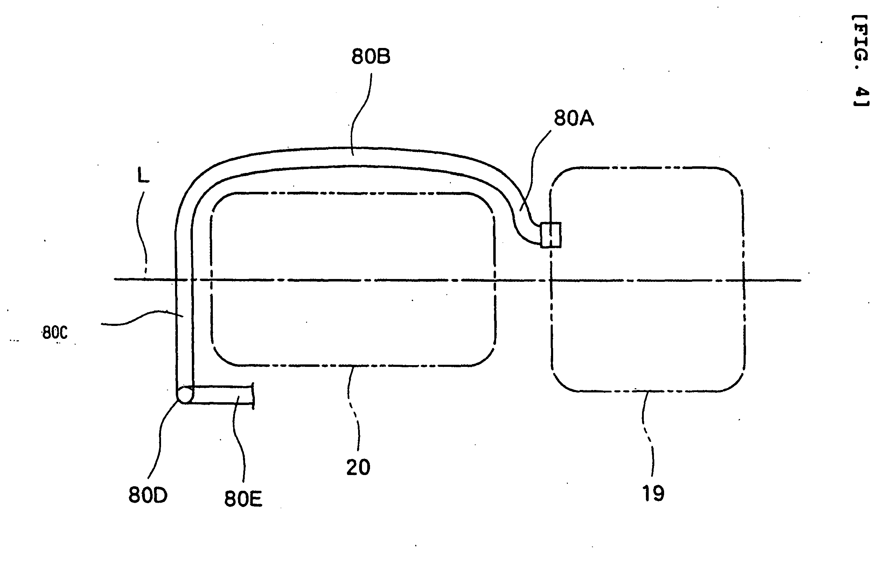

As shown in FIG. 2, the secondary air inducting conduit 80 is connected to a front end of the air cleaner 19 at its upstream end. The secondary air inducting conduit 80 includes a first conduit section 80A extending forward obliquely rightward therefrom, a second conduit section 80B extending from the first conduit section 80A gradually curving in an arc shape in a part above and the right of the cylinder 22, a third conduit section 80C extending from the second conduit section 80B, which is on one side (right side) in the right to left direction, to the other side in the right to left direction (left side) and traversing the center line L of the vehicle (see FIG. 4) in front of the cylinder 22, and a fourth conduit section 80D drooping from the third conduit section 80C.

Also, the secondary air inducting conduit 80 includes a fifth conduit section 80E extending rearward obliquely downward from the fourth conduit section 80D curving in a dog leg shape, a sixth conduit section 80F extending rearward from the fifth conduit section 80E in a generally horizontal direction curving in a L shape and partly overlapping the third frame 12C of the left frame 12 in a side view, and a seventh conduit section 80G (see FIG. 3) extending rightward from the sixth conduit section 80F in the horizontal direction curving in an arc shape, of which a downstream end 80G1 that is a connection part is connected to the fourth pipe 34 of the exhaust conduit 30 positioned between the front catalyzer 40 and the rear catalyzer 50. In addition, the connection part 80G1 of the seventh conduit section 80G is disposed below the crankcase 21.

As shown in FIG. 2, the third through the fifth conduit sections 80C through 80E of the secondary air inducting conduit 80 are disposed to expose toward an inside of a space S formed on a front part of the vehicle body between the front wheel 60 and the engine 20. Those third through fifth conduit sections 80C through 80E are not covered by a vehicle cover or the like, and can be visually recognized from places in the front and on the side of the vehicle, which are places outside the vehicle.

The first conduit section 80A, the second conduit section 80B, the third conduit section 80C, the fourth conduit section 80D, a lower part 80E1 of the fifth conduit section 80E, a rear part 80F1 of the sixth conduit section 80F, and the seventh conduit section 80G of the secondary air inducting conduit 80 are formed with metal pipes. Thereby, secondary air flowing in those conduit sections can be effectively cooled down. In addition, an upper part 80E2 of the fifth conduit section 80E and a front part 80F2 of the sixth conduit section 80F are formed with rubber hoses.

Therefore, secondary air flowing in the secondary air inducting conduit 80 is cooled down from its outside by cold air of the space S while passing through the third through fifth conduit sections 80C through 80E. Accordingly, those third through fifth conduit sections 80C through 80E have a function as a secondary air cooling conduit section for cooling down secondary air.

According to this embodiment with the above construction, the third through the fifth conduit sections 80C through 80E of the secondary air inducting conduit 80 are exposed to the space S more rearward than the front wheel and more forward than the engine 20. Therefore, secondary air is cooled down by the third through the fifth conduit sections 80C through 80E of the secondary air inducting conduit 80, and thereby an oxygen concentration of secondary air can be increased.

Accordingly, combustion efficiency of exhaust gas by secondary air can be sufficiently enhanced when secondary air inducted from the secondary air inducting conduit 80 into the exhaust conduit 30 passes through the rear catalyzer 50, and purification of exhaust gas by the rear catalyzer 50 can be effectively made.

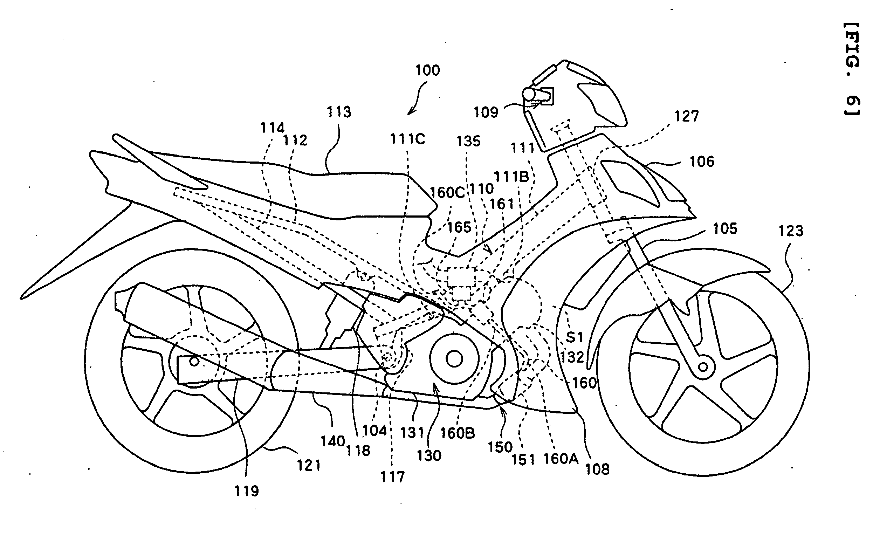

Next, FIGs. 6 through 8 show a second embodiment of the present teaching but does not illustrate the combination of the features of independent claim 1.

In FIG. 6, a frame 110 of a motorcycle 100 has a main frame 111. The main frame 111 is provided to extend obliquely downward from a front part of the vehicle in a front half part of the vehicle. A head pipe 127 is provided at its front end. The head pipe 127 pivotally supports a front fork 105. Handlebars 109 are provided at an upper end of the front fork 105. A front wheel 123 is pivotally supported at a lower end of the front fork 105.

Also, the frame 110 has a seat rail 112. The seat rail 112 is connected to a midway part of the main frame 111, and extends rearward obliquely upward therefrom. A seat 113 is disposed above the seat rail 112. Further, the frame 110 has a backstay 114. The backstay 114 is connected to a rear end of the main frame 111, and extends rearward obliquely upward therefrom. A rear end of the backstay 114 is connected to the seat rail 112.

A rear arm bracket 117 is mounted on a rear end of the main frame 111. An engine 130 is disposed below a rear part of the main frame 111. The engine 130 is positioned in a vicinity of the center in the fore to aft direction of the motorcycle 100. The engine 130 is suspended by midway parts 111B and 111C of the main frame 111, supported by the rear arm bracket 117, and fixed to the frame 110.

One end of a rear arm 119 is mounted on the rear arm bracket 117 via a pivot shaft 104. The other end of the rear arm 119 pivotally supports a rear wheel 121. The rear arm 119 and the rear wheel 121 are swingable relative to the frame 110 with the pivot shaft 104 provided on the rear arm bracket 117 being a fulcrum. A rear suspension 118 is provided between the rear arm 119 and the seat rail 112.

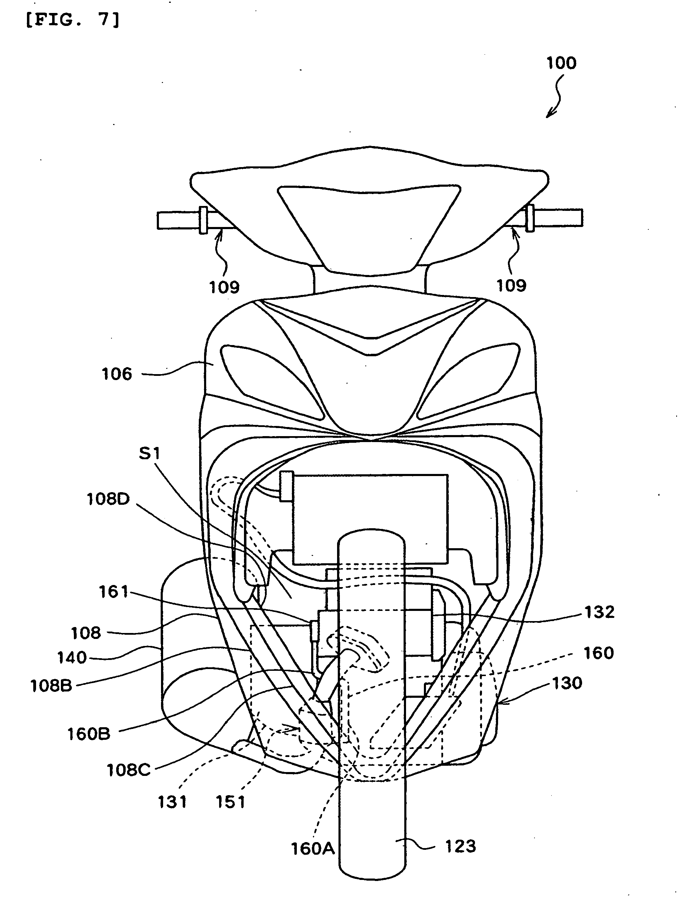

The frame 110 is covered by a vehicle cover 106 and a leg shield 108. The leg shield 108 is mounted on a front part of the vehicle cover 106. The leg shield 108 opens forward, and is a rectangular shape in a front view (see FIG. 7). Also, the leg shield 108 is formed to gradually taper forward. In addition, FIG. 7 shows ridge lines 108B and 108C of the leg shield 108.

The engine 130 is a single cylinder four-cycle engine, and includes a crankcase 131 for housing a crankshaft and a transmission inside and a cylinder 132 provided on an upper part of the crankcase 131 and having a cylinder body inside.

An intake port for inducting air and fuel into the engine 130 is formed in the cylinder 132. A manifold is connected to the intake port. A throttle body 135, in which an injector is provided, is connected to a part upstream of the manifold. A combustion chamber for combusting fuel supplied from the intake port with air is formed inside the cylinder 132.

Exhaust gas generated by combustion of fuel is discharged outside the engine 130 from an exhaust port formed in a front part of the cylinder 132.

An exhaust conduit 150 is connected to the exhaust port formed in the cylinder 132. The exhaust conduit 150 extends forward obliquely downward from the exhaust port, then curves, and further extends rearward obliquely downward. Thereafter, the exhaust conduit 150 further curves and extends rearward below the crankcase 131. A part of the exhaust conduit 150 more rearward than the crankcase 131 is housed in a silencer 140 disposed on a side of the rear wheel 121.

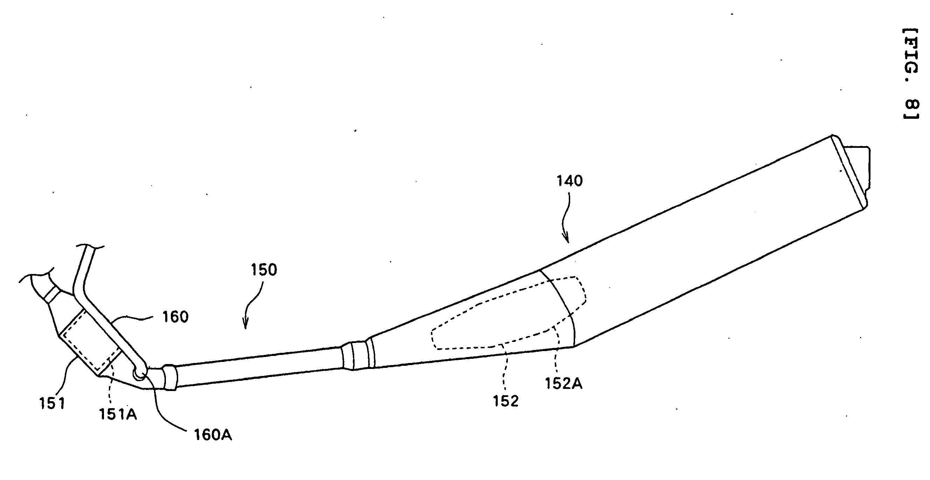

As shown in FIG. 8, a front catalyzer housing part 151 and a rear catalyzer housing part 152 disposed more downstream than the front catalyzer housing part 151 are provided in the exhaust conduit 150. The front catalyzer housing part 151 has a front catalyzer 151A mainly having reducing effect inside. The rear catalyzer housing part 152 has a rear catalyzer 152A mainly having oxidizing effect inside.

A secondary air inducting conduit 160 for supplying secondary air for exhaust gas is connected to the exhaust conduit 150. A downstream part (a part close to the exhaust conduit 150) of the secondary air inducting conduit 160 is disposed more forward than the crankcase 131 and above a lower surface of the crankcase 131. Its downstream end is connected to a part of the exhaust conduit 150 disposed more forward than the crankcase 131.

As shown in FIGs. 6 and 7, the secondary air inducting conduit 160 includes a first conduit section 160A extending inward in the vehicle width direction from its connection part with the front catalyzer housing part 151 and then curvedly extending upward of the vehicle, a second conduit section 160B curving upward from the first conduit section 160A in a crank shape and connected to a reed valve assembly 161 disposed on a side of the engine 130 at its upstream end, and a third conduit section 160C extending rearward from the reed valve assembly 161 and connected to an air cleaner (not shown).

Here, the first conduit section 160A and the second conduit section 160B of the secondary air inducting conduit 160 are exposed to an inside of a space S1 formed on a front part of the vehicle body and in the rear of the front wheel 23, and construct the secondary air cooling conduit. As shown in FIG. 7, the first conduit section 160A and the second conduit section 160B are disposed in positions that can be visually recognized from the front of the vehicle through an opening end 108D in front of the leg shield 108.

Further, an opening is formed on a side surface of the third conduit section 160C for connecting the reed valve assembly 161 and the air cleaner together. A box-shaped resonator 165 mounted on a lower part of the throttle body 135 is connected to the opening. A part of secondary air flowing into the exhaust conduit 150 flows from the third conduit section 160C into the resonator 165. Thereby, interference in gasses caused due to pulsation of secondary air is prevented, and air noise is reduced.

According to this embodiment with such a construction, the first conduit section 160A and the second conduit section 160B of the secondary air inducting conduit 160 are exposed to an inside of the space S1 formed on a front part of the vehicle body and in the rear of the front wheel 23. Thus, the secondary air inducting conduit 160 can be effectively cooled down, and the effect generally the same as the first embodiment can be realized.

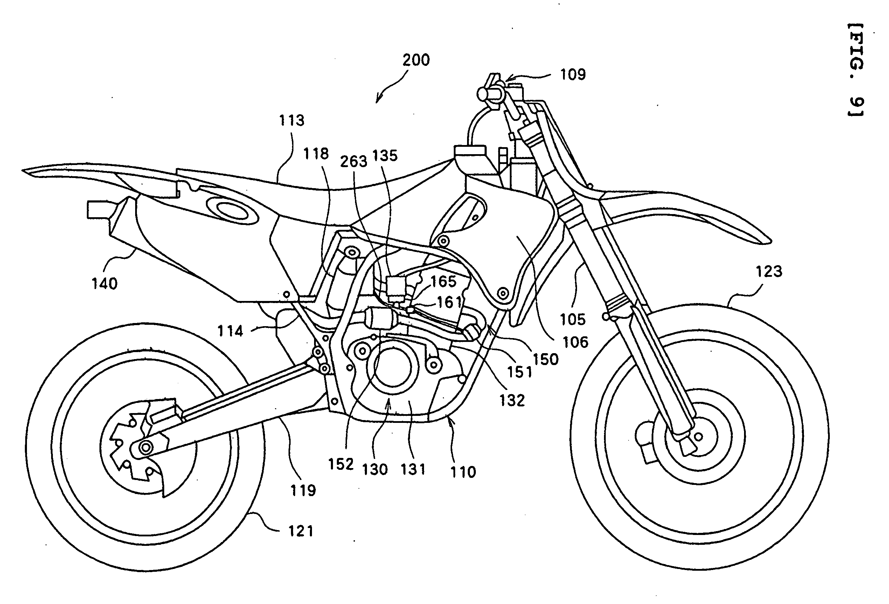

Next, FIG. 9 shows a third embodiment of the present teaching but does not illustrate the combination of the features of independent claim 1. In the figure, the same reference numerals and symbols are given to the parts same as FIGs.6 through 8, and detailed descriptions will not be made hereinafter.

In FIG. 9, an upstream end of a secondary air inducting conduit 263 is connected to a part of an exhaust conduit 50 between a front catalyzer housing part 51 and a rear catalyzer housing part 52. A downstream end of the secondary air inducting conduit 263 is connected to an air cleaner (not shown).

Here, the secondary air inducting conduit 263 is disposed to be exposed to a space on a side of the vehicle body in the rear of a front wheel 123. The secondary air inducting conduit 263 is disposed in a position that can be visually recognized from a side of the vehicle.

According to this embodiment with such a construction, the secondary air inducting conduit 263 is disposed to be exposed to the space on a side of the vehicle in the rear of the front wheel 123. Therefore, the secondary air inducting conduit 263 can be effectively cooled down, and the effect generally the same as the first embodiment can be realized.

In the first through the third embodiments, descriptions are made about a construction such that the engine is fixed to the frame as an example. However, the present teaching is not limited to this construction, but also can be applied to straddle type vehicles, for example, unit swing type vehicles, in which an entire engine unit swings together with a rear wheel, such as many scooters.

Also, in the first through the third embodiments, descriptions are made about a motorcycle as a straddle type vehicle as an example. However, the present teaching is not limited to motorcycles, but also can be applied to other straddle type vehicles, for example, three-wheeled motor vehicles, buggies, and so forth.

The description above discloses (amongst others), an embodiment of a straddle type vehicle including: an engine disposed between a front wheel and a rear wheel, a front catalytic converter and a rear catalytic converter spaced apart in the fore to aft direction in a midway part of an exhaust conduit of the engine, and a secondary air inducting conduit, of which a downstream end is connected to the exhaust conduit in a position between the front catalytic converter and the rear catalytic converter, in which a part of the secondary air inducting conduit is a secondary air cooling conduit section exposed at least either forward or sideward of the vehicle in the rear of the front wheel.

According to this embodiment, the secondary air cooling conduit section, which is a part of the secondary air inducting conduit, is exposed at least either forward or sideward of the vehicle in the rear of the front wheel. Thus, the secondary air cooling conduit section can be effectively cooled down, and an oxygen concentration of secondary air flowing through the secondary air cooling conduit section can be increased. Thereby, combustion efficiency of exhaust gas by secondary air can be sufficiently enhanced when secondary air inducted from the secondary air inducting conduit to the exhaust conduit flows through the rear catalyzer.

Also, preferably the secondary air cooling conduit section can be provided in a position more forward than the engine. With such a construction, a contact of a rearward hot air flow from the engine due to traveling with the secondary air cooling conduit section can be prevented. Thereby, without being affected by heat of the engine, the secondary air cooling conduit section can be more efficiently cooled down.

Also, preferably at least a part of an air cleaner can be disposed more rearward than the engine, and an upstream end of the secondary air inducting conduit can be connected to the air cleaner.

Further, preferably the secondary air cooling conduit section can be formed with a metal pipe. With such a construction, the secondary air cooling conduit section can be formed with a metal pipe, which has high thermal conductivity. Thereby, secondary air flowing through the secondary air cooling conduit section can be more effectively cooled down.

Further, preferably a connection part of the secondary air inducting conduit, which is connected to the exhaust conduit, can be disposed below the engine, and the secondary air inducting conduit can be formed to extend from the connection part in the horizontal direction below the engine. With such a construction, the secondary air inducting conduit can be lengthened to extend upstream from the connection part to the exhaust conduit in the horizontal direction, and thereby a sufficient length can be obtained for the inducting pipe for cooling down secondary air flowing in the secondary air inducting conduit. Accordingly, secondary air can be more efficiently cooled down.

Further, preferably the secondary air inducting conduit can be formed to extend from either one of the right side and the left side to the other side traversing a center of the vehicle. With such a construction, the secondary air inducting conduit can be formed to extend from either one of the right side and the left side to the other side traversing a center of the vehicle, and thus an entire length of the secondary air inducting conduit can be enlarged. Thereby, secondary air flowing in the secondary air inducting conduit can be sufficiently cooled down.

Also, preferably since the frame is formed with right and left frames, at least a part of the secondary air inducting conduit can be disposed to overlap the right and left frames in a side view. With such a construction, the secondary air inducting conduit can be protected from shocks from outside and so forth by the right and left frames.

The straddle type vehicle according to the present teaching has a construction such that the secondary air cooling conduit section of the secondary air inducting conduit is exposed at least either forward or sideward of the vehicle in the rear of the front wheel. Thus, an oxygen concentration of secondary air flowing through the secondary air cooling conduit section can be increased. Therefore, combustion efficiency of exhaust gas by secondary air can be sufficiently enhanced when secondary air inducted from the secondary air inducting conduit to the exhaust conduit flows through the rear catalyzer, and further assures purification of exhaust gas by the rear catalyzer.

The description further discloses, according to a preferred first aspect, an engine disposed between a front wheel and a rear wheel; a front catalytic converter and a rear catalytic converter spaced apart in the fore to aft direction in a midway part of an exhaust conduit of the engine; and a secondary air inducting conduit, of which a downstream end is connected to the exhaust conduit in a position between the front catalytic converter and the rear catalytic converter, wherein a part of the secondary air inducting conduit is a secondary air cooling conduit section exposed at least either forward or sideward in the vehicle in the rear of the front wheel.

Further, according to a preferred second aspect, the secondary air cooling conduit section is provided in a position more forward than the engine.

Further, according to a preferred third aspect, at least a part of an air cleaner is disposed more rearward than the engine, and an upstream end of the secondary air inducting conduit is connected to the air cleaner.

Further, according to a preferred fourth aspect, the secondary air cooling conduit section is formed with a metal pipe.

Further, according to a preferred fifth aspect, a connection part of the secondary air inducting conduit, which is connected to the exhaust conduit, is disposed below the engine, and the secondary air inducting conduit is formed to extend from the connection part in the horizontal direction below the engine.

Further, according to a preferred sixth aspect, the secondary air inducting conduit is formed to extend from either one of the right side and the left side to the other side traversing a center of the vehicle.

Further, according to a preferred seventh aspect, a frame is formed with right and left frames, at least a part of the secondary air inducting conduit is disposed to overlap the right and left frames in a side view.

The description still further discloses, in order to realize effective cooling of oxygen in air flowing through a secondary air inducting conduit, and enhance combustion efficiency of exhaust gas by secondary air in a catalyzer, according to a particularly preferred embodiment, that third through fifth conduit sections 80C through 80E of a secondary air inducting conduit 80 are exposed to a space S in the rear of a front wheel 60 and in front of an engine 20, and thus the third through the fifth conduit sections 80C through 80E become a secondary air cooling conduit section for cooling down secondary air. Thereby, secondary air flowing through the secondary air inducting conduit is cooled down by the third through the fifth conduit sections 80C through 80E, and an oxygen concentration of secondary air is increased.

## Claims

1. Straddle type vehicle comprising an engine (20) disposed between front and rear wheels, and first and second catalytic converters (40,50) disposed in an exhaust conduit (30) of the engine (20), a secondary air inducting conduit (80) is provided for supplying secondary air to the exhaust conduit (30) at a position between the first and second catalytic converters (40,50),
wherein a part of the secondary air inducting conduit (80) is provided in a position more forward than the engine (20) and in the rear of the front wheel, and least a part of an air cleaner (19) is disposed more rearward than the engine (20), and an upstream end (80A) of the secondary air inducting conduit (80) is connected to the air cleaner (19).

2. Straddle type vehicle according to claim 1, wherein the first and second catalytic converters are a front catalytic converter (40) and a rear catalytic converter (50) spaced apart in the fore to aft direction in a midway part (34) of an exhaust conduit (30) of the engine (20), and a downstream end (80G) of the secondary air inducting conduit (80) is connected to the exhaust conduit (30) in a position between the front catalytic converter (40) and the rear catalytic converter (50).

3. Straddle type vehicle according to claim 1 or 2, wherein the secondary air cooling conduit section is at least partially formed with a metal pipe.

4. Straddle type vehicle according to one of the claims 1 to 3, wherein a connection part (80G1) of the secondary air inducting conduit (80), which is connected to the exhaust conduit (30), is disposed below the engine (20), and the secondary air inducting conduit (80) is formed to extend from the connection part (80G1) in the horizontal direction below the engine (20).

5. Straddle type vehicle according to claim 4, wherein a part (80C) of the secondary air inducting conduit (80) is formed to extend from either one of the right side and the left side to the other side traversing a center of the vehicle.

6. Straddle type vehicle according to one of the claims 1 to 5, wherein a frame is formed with right and left frames (12,13), at least a part (80E) of the secondary air inducting conduit (80) is disposed to overlap the right and left frames in a side view.

## Patentansprüche

1. Fahrzeug vom Spreizsitz- Typ, aufweisend eine Brennkraftmaschine (20), angeordnet zwischen vorderen und hinteren Rädern, und einem ersten und einem zweiten katalytischen Wandler (40, 50), angeordnet in einer Abgasleitung (30) der Brennkraftmaschine (20), wobei eine Sekundärluft- Einleitungsleitung (80) zum Zuführen von Sekundärluft in die Abgasleitung (30) an einer Position zwischen dem ersten und dem zweiten katalytischen Wandler (40, 50) vorgesehen ist,
wobei ein Teil der Sekundärluft- Einleitungsleitung (80) in einer Position weiter vorn als die Brennkraftmaschine (20) und hinter dem Vorderrad vorgesehen ist und zumindest ein Teil des Luftfilters (19) weiter hinten als die Brennkraftmaschine (20) angeordnet ist und ein stromaufwärtiges Ende (80A) der Sekundärluft- Einleitungsleitung (80) mit dem Luftfilter (19) verbunden ist.

2. Fahrzeug vom Spreizsitz- Typ nach Anspruch 1, wobei der erste und zweite katalytischen Wandler (40, 50) ein vorderer katalytischer Wandler (40) und ein hinterer katalytischer Wandler (50) ist, beabstandet in der Vorwärts-Rückwärts-Richtung in einem mittleren Teil (34) einer Abgasleitung (30) der Brennkraftmaschine (20), und ein stromabwärtiges Ende (80G) der Sekundärluft- Einleitungsleitung (80) mit der Abgasleitung (30) in einer Position zwischen dem vorderen katalytischen Wandler (40) und dem hinteren katalytischen Wandler (50) verbunden ist.

3. Fahrzeug vom Spreizsitz- Typ nach Anspruch 1 oder 2, wobei der Sekundärluft- Einleitungsabschnitt zumindest teilweise mit einem Metallrohr gebildet ist.

4. Fahrzeug vom Spreizsitz- Typ nach zumindest einem der Ansprüche 1 bis 3, wobei ein Verbindungsteil (80G1) der Sekundärluft- Einleitungsleitung (80), das mit der Abgasleitung (30) verbunden ist, unter der Brennkraftmaschine (20) angeordnet ist und die Sekundärluft- Einleitungsleitung (80) ausgebildet ist, sich von dem Verbindungsteil (80G1) in der horizontalen Richtung unter der Brennkraftmaschine (20) zu erstrecken.

5. Fahrzeug vom Spreizsitz- Typ nach Anspruch 4, wobei ein Teil (80C) der Sekundärluft- Einleitungsleitung (80) ausgebildet ist, sich von einer Seite der rechten Seite oder der linken Seite zu der anderen Seite, eine Mitte des Fahrzeuges überquerend, zu erstrecken.

6. Fahrzeug vom Spreizsitz- Typ nach zumindest einem der Ansprüche 1 bis 5, wobei ein Rahmen mit einem rechten und einem linken Rahmen (12, 13) gebildet ist, wobei zumindest ein Teil (80E) der Sekundärluft- Einleitungsleitung (80) vorgesehen ist, dem rechten und linken Rahmen in einer Seitensicht zu überlappen.

## Revendications

1. Véhicule de type à monter à califourchon comprenant un moteur (20) disposé entre des roues avant et arrière, et des premier et second convertisseurs catalytiques (40, 50) disposés dans un conduit d'échappement (30) du moteur (20), un conduit d'induction d'air secondaire (80) est prévu pour délivrer de l'air secondaire au conduit d'échappement (30) à une position entre les premier et second convertisseurs catalytiques (40, 50),
dans lequel une partie du conduit d'induction d'air secondaire (80) est disposée dans une position plus à l'avant que le moteur (20) et à l'arrière de la roue avant, et au moins une partie d'un filtre à air (19) est disposée plus à l'arrière que le moteur (20), et une extrémité amont (80A) du conduit d'induction d'air secondaire (80) est reliée au filtre à air (19).

2. Véhicule de type à monter à califourchon selon la revendication 1, dans lequel les premier et second convertisseurs catalytiques sont un convertisseur catalytique avant (40) et un convertisseur catalytique arrière (50) espacés dans la direction d'avant en arrière dans une partie à mi-chemin (34) d'un conduit d'échappement (30) du moteur (20), et une extrémité aval (80G) du conduit d'induction d'air secondaire (80) est reliée au conduit d'échappement (30) dans une position entre le convertisseur catalytique avant (40) et le convertisseur catalytique arrière (50).

3. Véhicule de type à monter à califourchon selon la revendication 1 ou 2, dans lequel la section de conduit de refroidissement d'air secondaire est au moins partiellement formée avec un tuyau de métal.

4. Véhicule de type à monter à califourchon selon l'une des revendications 1 à 3, dans lequel une partie de raccordement (80G1) du conduit d'induction d'air secondaire (80), qui est raccordée au conduit d'échappement (30), est disposée sous le moteur (20), et le conduit d'induction d'air secondaire (80) est formé pour s'étendre de la partie de connexion (80G1) dans la direction horizontale sous le moteur (20).

5. Véhicule de type à monter à califourchon selon la revendication 4, dans lequel une partie (80C) du conduit d'induction d'air secondaire (80) est formée pour s'étendre de l'un ou l'autre du côté droit et du côté gauche vers l'autre côté traversant un centre du véhicule.

6. Véhicule de type à monter à califourchon selon l'une des revendications 1 à 5, dans lequel un cadre est formé avec des cadres droit et gauche (12, 13), au moins une partie (80E) du conduit d'induction d'air secondaire (80) est disposée pour chevaucher les cadres droit et gauche dans une vue latérale.
